(19) Europäisches Patentamt
European Patent Office
Office européen des brevets

(11) **EP 4 776 622 A1**

(12) **EUROPEAN PATENT APPLICATION**

(43) Date of publication:
**15.07.2026 Bulletin 2026/29**

(21) Application number: **25151688.6**

(22) Date of filing: **14.01.2025**

(51) International Patent Classification (IPC):
**H04N 19/587** (2014.01) **H04N 7/01** (2006.01)
**G06T 7/20** (2017.01)

(52) Cooperative Patent Classification (CPC):
**H04N 7/014; G06T 7/20; H04N 19/587**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Sony Interactive Entertainment Europe
Limited
London W1F 7LP (GB)**

(72) Inventors:
• **CHADHA, Aaron
London, W1F 7LP (GB)**
• **LUTZ, Sebastian
London, W1F 7LP (GB)**

(74) Representative: **Gill Jennings & Every LLP
The Broadgate Tower
20 Primrose Street
London EC2A 2ES (GB)**

(54) **GENERATING AN INTERMEDIATE FRAME OF VIDEO**

(57) A method of generating an intermediate frame of video, comprising the steps of: receiving a plurality of frames of video, wherein the frames are temporally consecutive; determining, from the received plurality of frames, at least one vector flow field representing a required pixel displacement between a received frame and the intermediate frame; determining at least one motion vector field representing the motion of an object shown in the received frames; and generating the intermediate frame from the received plurality of frames using the determined vector flow field and the determined motion vector field.

Fig. 3

**Description**

Technical Field

The present disclosure concerns computer-implemented methods for processing video data. In particular, but not exclusively, the disclosure concerns computer-implemented methods, computing devices and computer program products for generating intermediate frames of video.

Background

Frame interpolation is a video processing technique that involves generating intermediate frames between existing frames of video. Frame extrapolation, similarly, involves generating frames that temporally follow existing frames. These processes can increase the frame rate of the video, and can enhance visual quality, e.g. by creating more fluid motion in videos, reducing judder, or compensating for display motion blur. Further, such techniques can be used to increase the apparent frame rate of video games for a more realistic feel.

However, known methods of frame interpolation or extrapolation may fail to accurately capture motion of the various elements in a scene. Accuracy may be particularly limited when there is a relatively large amount of motion in the scene. Such limitations negatively affect the visual quality of the generated frames, and this in turn impacts the quality (and the associated viewing experience) of the resulting video.

The present disclosure seeks to solve or mitigate some or all of these above-mentioned problems. Alternatively and/or additionally, aspects of the present disclosure seek to provide improved methods for processing video data.

Summary

In accordance with a first aspect of the present disclosure there is provided a computer-implemented method of generating an intermediate frame of video, comprising the steps of:

receiving a plurality of frames of video, wherein the frames are temporally consecutive;
determining, from the received plurality of frames, at least one vector flow field representing a required pixel displacement between a received frame and the intermediate frame;
determining at least one motion vector field representing the motion of an object shown in the received frames; and
generating the intermediate frame from the received plurality of frames using the determined vector flow field and the determined motion vector field.

By generating the intermediate frame using both the determined vector flow field and the determined motion vector field, the visual quality of the intermediate frame is improved. This in turn improves a visual quality of the overall video including the intermediate frame. In particular, the presently-disclosed methods allow for the motion of various elements of a scene to be more accurately captured and/or represented in the video, even when there is a relatively large amount and/or complexity of motion.

Each of the vector flow field and the motion vector field may, individually, provide useful information for the generation of intermediate frames of video. However, it is the combination of both fields which provides an improvement in visual quality and accuracy. The two fields may act in concert, each capturing different and complementary information which may be combined in an intelligent and flexible manner to generate the intermediate frame. The vector flow field represents optical flow and acts at the pixel level, using pixel-wise colour correspondences between frames. The motion vector field, on the other hand, acts at the level of objects depicted in the video scene, rather than the pixel level. In embodiments, the at least one motion vector field is determined from the received plurality of frames. Additionally or alternatively, the at least one motion vector field may be determined from one or more received motion vectors. Motion vectors can be obtained directly, e.g. from a game engine, and as such may represent a ground-truth motion that is to be depicted in the video. The optical flow, represented by the vector flow field, can capture supplementary information such as particles, shadows, lighting and reflections, which may not be captured by the game engine motion vectors. The determined vector flow field and motion vector field may each be applied to a frame of video in order to obtain a respective representation of a frame of the video at a different timestep, e.g. in a warping operation, as will be described further below.

The optical flow between the received frames and the to-be-generated intermediate frame can be determined using a flow estimation model. The flow estimation model may comprise an artificial neural network. Such a neural network may be trained (e.g. using back-propagation of errors and/or gradient descent) to optimise an accuracy of flow estimation and/or a visual quality of videos generated using such flow estimation.

In embodiments, the method comprises displaying the generated intermediate frame. The intermediate frame may be displayed via a display device, which may be separate from, or integrally formed with, the entity responsible for generating the intermediate frame. In embodiments, the method comprises displaying a video comprising the intermediate frame and the received frames.

As mentioned above, the received frames are temporally consecutive. That is, the received frames initially have no intermediate frames between successive ones of the received frames. For example, the video may comprise a sequence of frames, and the received frames comprise frames that are consecutive in the sequence. If the video has an initial framerate of 15 frames per second (FPS), for example, the received frames may have a temporal spacing of $1/15^{th}$ of a second between each frame. In embodiments, the received frames are rendered frames, i.e. frames having gone through a rendering process. Such a rendering process may involve generating a 2D image from a 3D scene model, for example. In alternative embodiments, the received frames are not rendered frames.

In embodiments, the received plurality of frames comprises frames temporally after the intermediate frame. In embodiments, the received plurality of frames comprises frames temporally before the intermediate frame. In embodiments, the received plurality of frames comprise frames temporally before the intermediate frame and frames temporally after the intermediate frame. That is, the intermediate frame, once generated, may be between a first set of the received frames and a second set of the received frames. This corresponds to frame interpolation. Accordingly, while the received frames are temporally consecutive frames prior to the generation of the intermediate frame, they may no longer be temporally consecutive frames after the intermediate frame has been generated, since the intermediate frame is to go between two of the received frames. Alternatively, the received plurality of frames may comprise only frames that are temporally before the intermediate frame. This corresponds to frame extrapolation. It will be understood that, even in the case of frame extrapolation, the generated frame can still be referred to as an "intermediate frame", since it is to be temporally sandwiched between the received plurality of frames and a further plurality of frames). That is, the generated frame is intermediate one of the received frames and one or more other frames of the video. In the extrapolation case, the received frames remain as temporally consecutive frames once the intermediate frame has been generated, since the intermediate frame is to be temporally after the received frames.

In embodiments, generating the intermediate frame affects the order in which frames are displayed. For example, frames 0, 1, 2 may be received and used to generate frames 0.5 and 1.5. These frames will then be displayed in the order 0, 0.5, 1, 1.5, 2. In other words, the generated frames may be positioned and displayed between the received frames. In some cases, this process may be performed asynchronously. For example, frames 0 and 1 may be received, frame 0.5 may be generated while frame 0 is being displayed, the generated frame 0.5 may then be displayed prior to displaying frame 1, then frame 1 may be displayed while frame 1.5 is being generated, etc. In embodiments, for interpolation, frames 0 and 1 may be rendered, held, used to generate the intermediate frame 0.5, and then displayed (with frame 0.5 between frames 0 and 1). For extrapolation, there may be a refresh interval wherein both previously-rendered and extrapolated (i.e. generated) frames may be displayed.

In embodiments, the method further comprises generating a plurality of intermediate frames. The plurality of intermediate frames may be temporally consecutive. For example, 2, 3, 4 or 5 intermediate frames may be generated to be arranged between a single pair of received frames. The plurality of intermediate frames may be generated from the received plurality of frames, using the at least one motion vector field and the at least one vector flow field. Generating multiple intermediate frames enables the framerate of the video to be further increased, e.g. from 15 FPS to 60 FPS. In alternative embodiments, only a single intermediate frame is generated from the received plurality of frames.

In embodiments, the method further comprises a step of determining, for each intermediate frame of the plurality of intermediate frames, from the received plurality of frames, a corresponding vector flow field. In embodiments, each intermediate frame is generated using its corresponding determined vector flow field. Each of the plurality of vector flow fields may comprise a bidirectional vector flow field. In embodiments, the plurality of vector flow fields are generated from a single flow estimation model. As mentioned above, the flow estimation model may comprise an artificial neural network.

In embodiments, the method comprises a step of generating, for each intermediate frame of the plurality of intermediate frames, from the determined one vector flow field, a corresponding intermediate vector flow field. In embodiments, each intermediate frame is generated using its corresponding intermediate vector flow field. In embodiments, each intermediate vector flow field is generated from the determined vector flow field using a linear function. In other words, a single vector flow field (e.g. a bidirectional flow field) is generated using a flow estimation model, and then a linear function is applied to the single vector flow field to obtain the intermediate vector flow fields for each of the intermediate frames. The linear function may correspond to an assumption that motion is approximately linear over time between consecutive frames of the video. This may improve computationally efficiency, e.g. in terms of required computing resources and/or processing time. Other functions, e.g. non-linear functions may be used in alternative embodiments.

In embodiments, the method further comprises a step of receiving object motion information from a game engine for an object shown in the received frames. The received object motion information may comprise ground truth motion vectors, for example. In such embodiments, the at least one motion vector field is determined using the received object motion information. As such, the determining the at least one motion vector field may comprise receiving one or more motion vectors (e.g. from a game engine) and using the motion vectors to determine (e.g. generate) the motion vector field. The object motion information may be represented in one or more game buffers. The object motion information represented in the game buffers may include, for example, motion vectors, depth information, camera matrices, albedo maps, surface normals, etc. In embodiments, the game engine already possesses the object motion information (e.g. the ground truth motion vectors). For example, the object motion information may already be used for other purposes and/or processes, such as animation, rendering, etc. Embodiments described herein exploit and provide an additional use for this information, namely to facilitate the generation of intermediate frames of video. This not only improves the visual quality and/or accuracy of the generated frames, but such improvements may be achieved in an efficient manner, by using existing information that can be made available by the game engine directly.

In embodiments, the at least one motion vector field comprises a first motion vector field indicative of camera movement, and a second motion vector field indicative of movement of an object shown in the received frames. The first motion vector field (indicative of camera movement) may be referred to as a "camera vector field", and the second motion vector field (indicative of movement of an object) may be referred to as a "movement vector field". The camera vector field may be derived using camera matrices provided by a game engine, for example. The camera vector field may be applied to static objects depicted in the scene, whereas the movement vector field (or both the camera vector field and the movement vector field) may be applied to moving objects in the scene. Accordingly, both types of motion (movement of objects and movement of the camera) may be represented in the at least one motion vector field. In alternative embodiments, the at least one motion vector field does not comprise a motion vector field indicative of camera movement.

In embodiments, the method comprises determining positions, in the received frames, that correspond to movement of the object. For the determined positions, vectors in the first motion vector field (i.e. the camera vector field) are overwritten with vectors from the second motion vector field (i.e. the movement vector field). In embodiments, the determining the positions is based on a perspective projection of grid coordinates using world-to-view space and view-to-projection space camera matrices. The determining the positions may also be based on one or more ground-truth motion vectors. The camera matrices and/or the ground-truth motion vector may be obtained from a game engine. In embodiments, the determining the positions is based on a comparison between a first set of grid positions resulting from the perspective projection (using the camera matrices) and a second, corresponding set of grid positions resulting from a translation using the ground-truth motion vector. Element-wise differences between each grid position in the first set and its corresponding grid position in the second set may be calculated, and the motion vectors may be corrected based on these differences.

In embodiments, the method comprises a step of generating, for each intermediate frame of the plurality of intermediate frames, from the determined one motion vector field, a corresponding intermediate motion vector field. In such embodiments, each intermediate frame is generated using its corresponding intermediate motion vector field. In embodiments, each intermediate motion vector field is generated from the determined motion vector field using a linear function. The linear function may correspond to an assumption that motion is approximately linear over time between consecutive frames of the video. A non-linear function may be used in other embodiments.

In embodiments, generating the intermediate frame comprises performing a first warping operation on at least one of the received frames using the determined at least one vector flow field to generate a first representation of the intermediate frame. Generating the intermediate frame may further comprise performing a second warping operation on at least one of the received frames using the determined at least one motion vector field to generate a second representation of the intermediate frame. In embodiments, generating the intermediate frame comprises determining a set of weights for combining the first representation and the second representation. In embodiments, generating the intermediate frame comprises combining the first representation and the second representation in accordance with the determined set of weights.

In embodiments, the set of weights is determined using an artificial neural network, ANN. Such an ANN may itself comprise a set of interconnected weights, which may be applied to input data (e.g. the first representation and/or the second representation) to process the input data. The ANN may comprise a convolutional neural network, CNN. The ANN may be configured to receive warped representations as an input and to output a set of weights for combining the first representation and the second representation (e.g. in the form of a generated mask), after applying the weights of the network to the input data. 'Training' an ANN, as described herein refers to adjusting (or 'updating') the internal parameters of the model, e.g. the weights of the ANN that will be applied to the input data to process the input data. It will be understood that training of the ANN may occur prior to the method described above. That is, when the above-described method is performed, the training of the ANN may have already taken place, and the ANN is thus a 'trained ANN. In alternative embodiments, training of the ANN occurs as part of the above-described method. In embodiments, the ANN is trained by calculating a loss function comprising one or more of: a binary cross-entropy loss, a Hinge loss, an L1 or L2 loss, a Huber loss, or a cosine similarity or log-cosh loss. Other loss functions may be used in alternative embodiments. In particular, a combination of L1, structural similarity (SSIM) and VGG perceptual and style loss may be used. Additionally or alternatively, a consistency loss function may be used.

In alternative embodiments, the ANN receives the first and second representations of the intermediate frame and produces the intermediate frame directly as an output. That is, determining weights for combining the first and second representations may not be an explicit step, but may merely be part of the processing performed by the ANN to produce the intermediate frame.

In alternative embodiments, the intermediate frame is generated without performing warping operations on the received frames.

In embodiments, the method comprises using heuristics to determine an accuracy of the flow vector field and/or the motion vector field (e.g. flow and motion vectors) in colorspace. The determined accuracy may then be used to generate the intermediate frame (e.g. by influencing how the first and second representations, corresponding to the flow and motion vector fields respectively, are to be combined). In particular, the heuristics may be used to generate an error map for the intermediate frame. The error map represents the accuracy of the flow vector field and/or the motion vector field, and may be used to generate the intermediate frame.

In embodiments, the method comprises using regularization losses to bias the final blended output (i.e. the generated intermediate frame, combining the flow representations with the motion vector representations) towards certain representations, e.g. the flow representations.

In embodiments, the method comprises generating disocclusion masks for the motion vectors. Such disocclusion masks may be generated implicitly, by adding a scalar value, $\alpha$, to the depth prior to motion vector splatting. For example, if the depth values range from 0 to 1, the scalar offset would push the range between $\alpha$ and $1 + \alpha$. Consequently, in the splatted depth, any zero values would represent holes and areas of disocclusion. The generated disocclusion masks may then be used to generate the intermediate frame.

In embodiments, the method comprises modifying training images by overlaying figures and/or text to emulate user interface elements of a video game. Such figures and/or text may be randomly generated and/or positioned in the training images. Such training images may be used to train the ANN (e.g. the ANN used to estimate optical flow and/or the ANN used to blend the flow warped and motion vector warped representations of the intermediate frame). This improves the resulting performance of the ANN, particularly where the ANN is to be used for generating video frames of a video game. In embodiments, training is performed (i.e. to train the ANN) using random data augmentations, including randomly augmenting the brightness, contrast, hue and/or saturation of input and ground-truth training images. Additionally or alternatively, random crops, horizontal/vertical flips and/or rotations of the images and input flow vectors may be performed. This improves the performance of the ANN, e.g. by generalizing the model to unseen content.

The methods of processing video data described herein may be performed on a batch of video data, e.g. a complete video file for a movie or the like, or on a stream of video data.

In accordance with another aspect of the disclosure there is provided a computing device comprising:

one or more processors; and
memory;
wherein the computing device is arranged to perform, using the one or more processors, any of the methods described above. The computing device may comprise or be arranged in a server, for example. Alternatively, the computing device may comprise or be arranged in a user device.

In accordance with another aspect of the disclosure there is provided a computer program product arranged, when executed on a computing device comprising one or more processors and memory, to cause the computing device to perform, using the one or more processors, any of the methods described above.

It will of course be appreciated that features described in relation to one aspect of the present disclosure described above may be incorporated into other aspects of the present disclosure.

Description of the Drawings

Embodiments of the present disclosure will now be described by way of example only with reference to the accompanying schematic drawings of which:

Figure 1 is a schematic workflow diagram showing a video processing framework in accordance with embodiments;
Figure 2 is a schematic diagram showing an example neural network architecture, in accordance with embodiments;
Figure 3 is a flowchart showing the steps of a method of generating an intermediate frame of video, in accordance with embodiments; and
Figure 4 is a schematic diagram of a computing device in accordance with embodiments.

Detailed Description

The present disclosure provides a video processing framework that generates one or more frames between existing (e.g. rendered or otherwise) frames of video. The generated frames are referred to as "intermediate" frames. The frames can be generated via extrapolation or interpolation. Under an interpolation instantiation, the framework can take as input two sets of temporally consecutive frames (rendered or otherwise), $\mathcal{I}_0 = \{I_{t-N}, I_{t-N+1}, ..., I_{t-1}\}$ and $\mathcal{I}_1 = \{I_{t+K}, I_{t+K+1}, ..., I_{t+K+O-1}\}$ (where $N \in \mathbb{Z}, N \geq 1$, $O \in \mathbb{Z}, O \geq 1$), to generate $K$ intermediate frames $\mathcal{I}_{\text{gen}} = \{I_t, I_{t+1}, ..., I_{t+K-1}\}$ at timestep $t$, where $K \in \mathbb{Z}, K \geq 1$. For 4x interpolation, where the output framerate would be increased by 4 times (e.g. from 15 to 60FPS), $K$ would be set to 3. In a standard video interpolation pipeline $O$ and $N$ would both be set to 1 (i.e. one would only use a single pair of rendered frames to generate a single or multiple intermediate frames). In addition, the framework can optionally ingest game buffers (e.g. motion vectors, depth, camera matrices, albedo maps and/or surface normals) for each frame in sets $\mathcal{I}_0$, $\mathcal{I}_1$ and $\mathcal{I}_{\text{gen}}$. The corresponding buffer sets are denoted as $\mathcal{B}_0$, $\mathcal{B}_1$ and $\mathcal{B}_{\text{gen}}$. Under an extrapolation instantiation, the framework takes as input only a single set of past frames $\mathcal{I}_0$ and generates $K$ future frames $\mathcal{I}_{\text{gen}}$ at timestep $t$. The future frames may still be referred to as "intermediate frames", since they are temporally before one or more other frames of the video.

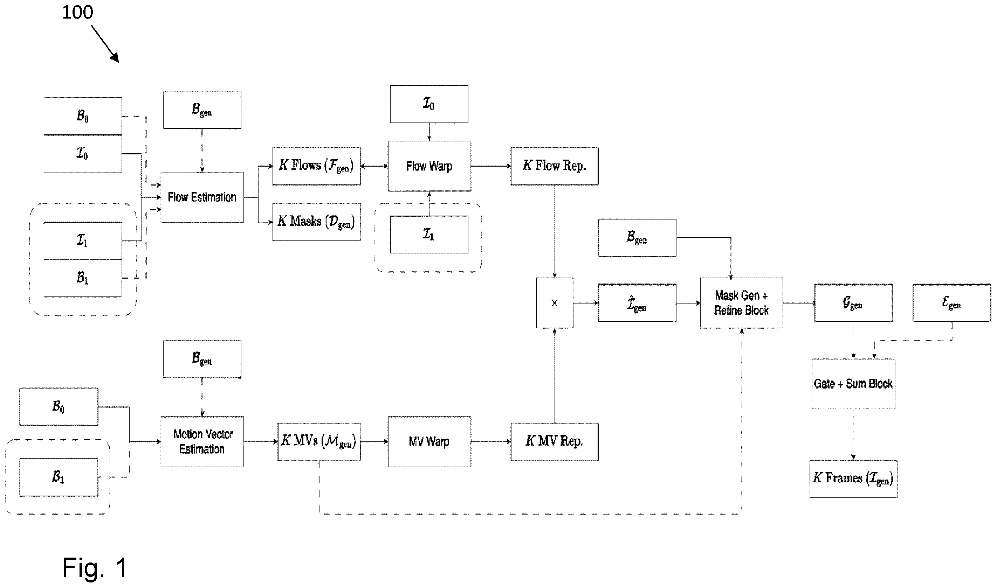

Figure 1 is a schematic diagram showing the video processing framework 100 according to embodiments. In particular, Figure 1 shows a framework for instantiation of multi-frame generation, though it will be understood that only a single frame may be generated in some cases. Dashed arrows in Figure 1 represent inputs which can be omitted in some embodiments. Dashed rectangles represent elements that are applicable to interpolation examples but not to extrapolation examples. It will be understood that the framework 100 may have more, fewer and/or different components and/or functions than those shown in Figure 1 in alternative embodiments. Various components of the framework 100 shown in Figure 1 will now be described.

First, optical flow estimation (i.e. for determining a vector flow field) will be described. While game engine motion vectors can capture ground-truth object and camera motion in rendered frames, they fail to capture motion of certain elements such as particles, reflections, shadows, lighting and user interface (UI) elements. To resolve these cases, an optical flow estimation model is employed, which ingests frames from $\mathcal{I}_0$ (and $\mathcal{I}_1$ for interpolation) plus optional game buffers from each frame, and outputs a vector flow field for each generated frame. The flow estimation model may comprise an artificial neural network. The vector flow field represents the pixel displacement between the generated frame and frames in $\mathcal{I}_0$ (and $\mathcal{I}_1$ for interpolation). The task of the interpolation or extrapolation framework is then to decide how to accurately blend the flow warped and motion vector warped representations, in order to generate the frame set $\mathcal{I}_{\text{gen}}$. This will be described in more detail below.

For multi-frame interpolation, the $K$ intermediate frames may be generated by recursively passing the output flow projected frame back into the flow estimation model. However, the compute cost of this process increases linearly with the interpolation factor, or in other words the number of recursions doubles as the desired framerate doubles. Two mechanisms are provided herein to deal with this issue. One or both of these mechanisms may be employed in the examples described herein.

The first mechanism ('mechanism 1') is to generate $K$ bidirectional flow fields from a single model (and optionally also corresponding predicted disocclusion masks). For the final frame of $\mathcal{I}_0$, $I_{t-1}$, and the first frame of $\mathcal{I}_1$, the following flows are generated (Equation 1):

$$\mathcal{F}_{\text{gen}} = \{(F_{t \to (t-1)}, F_{t \to (t+K)}), \dots, \\ (F_{(t+K-1) \to (t-1)}, F_{(t+K-1) \to (t+K)})\}. \tag{1}$$

The second mechanism ('mechanism 2') is to generate a single bidirectional flow field between $\mathcal{I}_0$ and $\mathcal{I}_1$, and then use a linearity assumption to generate intermediate bidirectional flow fields for each of the $K$ generated frames (and optionally corresponding disocclusion masks). For the final frame of $\mathcal{I}_0$, $I_{t-1}$, and the first frame of $\mathcal{I}_1$, the following flows are generated (Equation 2):

$$\mathcal{F}_{\text{gen}} = \{(\frac{1}{K+1} F_{(t-1) \to (t+K)}, (1 - \frac{1}{K+1}) F_{(t+K) \to (t-1)}), \dots, \\ ((1 - \frac{1}{K+1}) F_{(t-1) \to (t+K)}, \frac{1}{K+1} F_{(t+K) \to (t-1)})\} \tag{2}$$

For simplicity, an example instantiation for interpolation is considered of $t = O = N = 1$, and $K = 3$ (e.g. transitioning from 15 to 60FPS). For Equation 1, $\mathcal{F}_{\text{gen}} = \{(F_{1\to0}, F_{1\to4}),...,(F_{3\to0}, F_{3\to4})\}$. For Equation 2, $\mathcal{F}_{\text{gen}} = \{(0.25F_{0\to4}, 0.75F_{4\to0}),..., (0.75F_{0\to4}, 0.25F_{4\to0})\}$.

In the case of Equation 1, the flow is $t$-centered (i.e. centered on the coordinates of the generated frame), whereas for Equation 2 it is centered on the input frames. The $t$-centered flow is correct for backward warping, which is cheaper in bandwidth than forward warping/splatting (given that splatting requires 4 times the number of writes). It may be ensured that the flow for Equation 2 is also t-centered, by splatting the flow corresponding to each generated frame into $t$ and reversing (i.e. flipping the sign). Splatting can be performed either with a learned metric and using a softmax splatting, or via a game engine buffer such as depth maps, and using max splatting. Max splatting requires less bandwidth than softmax splatting as there is no kernel normalization (the corresponding coordinate with maximum depth can be taken in the case of a splatting collision).

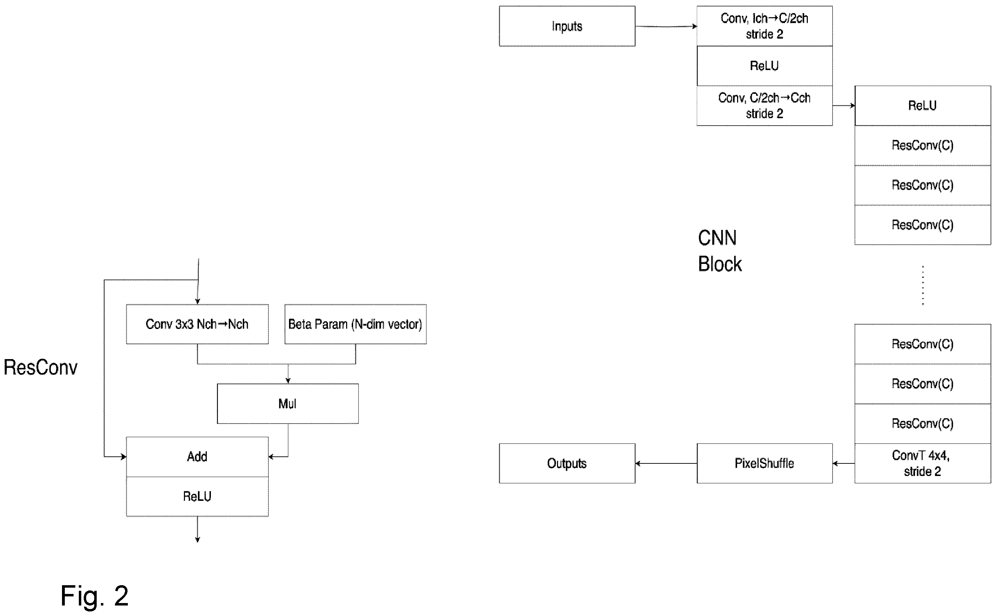

For Equation 1 and interpolation, a flow estimation model may be used. Such a model may be composed of multiple convolutional neural network, CNN, blocks of the type shown in Figure 2. The first such block takes as input a single pair of frames $I_0$ and $I_2$ and outputs a bidirectional flow field ($F_{1\to0}$, $F_{1\to2}$) and disocclusion mask $M_1$, which is subsequently refined by the next blocks. Such an example model can only handle single frame interpolation, however; multi-frame interpolation would require the recursive process described above. However, the above-described architecture can be extended to handle multi-frame interpolation by extending the CNN blocks to optionally ingest multiple frames from sets $\mathcal{I}_0$ and $\mathcal{I}_1$, along with corresponding game buffers. The first CNN block can be configured to output the entire set of bidirectional flow fields $\mathcal{F}_{\text{gen}}$ and disocclusion masks $\mathcal{D}_{\text{gen}} = \{D_t,..., D_{t+K-1}\}$ and these can be jointly refined by the proceeding blocks. Thus any recursion is avoided, and one shot multi-frame generation is ensured.

On the other hand, for Equation 2, a bespoke optical flow model, such as PWCNet or otherwise, can be extended, as the initial bidirectional flow is between existing/rendered frames in $\mathcal{I}_0$ and $\mathcal{I}_1$. The optical flow models can be used off-the-shelf or can be extended and/or modified with multiple frames from sets $\mathcal{I}_0$ and $\mathcal{I}_1$ and optionally game buffers. Then, the linearity assumption as denoted above for Equation 2 can be applied. The flow estimation model can be trained with a combination of VGG perceptual and style losses and L1 losses, for example. These losses can be applied between the final output flows and ground-truth frames as well as the intermediate outputs per block.

For extrapolation, the above logic also applies; however, there is no access to the set of 'future' frames $\mathcal{I}_1$. Therefore, all flow fields will be unidirectional. However, it may be noted that flow fields can be generated between all pairs of frames in sets $\mathcal{I}_0$ and $\mathcal{I}_{\text{gen}}$ Using set notation and denoting $f$ as the function representing flow computation, $f: \mathcal{I}_0 \times \mathcal{I}_{\text{gen}} \to \mathcal{F}_{\text{gen}}$. This can also be extended to interpolation, where one can generate flow fields for $\mathcal{I}_0 \times \mathcal{I}_{\text{gen}}$, $\mathcal{I}_1 \times \mathcal{I}_{\text{gen}}$ (i.e. for Equation 1) or $\mathcal{I}_0 \times \mathcal{I}_1$ and use the linearity assumption (i.e. for Equation 2). Multiple flow generation in this manner would be valuable for cases of large disocclusion or double disocclusions. Note, for both extrapolation and interpolation, depending on how large the sets are this could be prohibitively expensive. Finally, for extrapolation, if the base color (e.g. from albedo maps) and/or surface normals are provided for the timesteps of generated frames, this can be leveraged as an input to the flow estimation, in order to guide where pixel correspondences exist in the extrapolated frames.

Motion vector estimation will now be described. In contrast to previous methods that perform flow estimation and refinement, the presently-disclosed methods also use auxiliary buffers (e.g. motion vectors and optionally depth maps) available directly from the game engine. Contrary to optical flow, which is computed using pixel-wise color correspondences and typically suffers under large motion, the motion vectors from the game engine represent the ground-truth motion of game assets (e.g. objects, characters, etc.) in clip space (encapsulating both ego (camera) motion and object motion). On the other hand, optical flow is beneficial for capturing pixel-level information such as particles, shadows, lighting and reflections, which are not captured by the game engine motion vectors. To this end, presently-disclosed embodiments jointly process and refine both motion vectors and optical flow, which are used in combination to generate the intermediate frames. Motion vector estimation and optical flow estimation may be performed concurrently or sequentially.

Using a single-frame example of $t = O = N = K = 1$ and for existing frames $I_2$ and $I_0$, the game engine may output unidirectional motion vectors $M'_{2\to0}$. A forward warp or splat of $I_2$ using a linear assumption of $M'_{2\to t} = tM'_{2\to0}$ may generate holes in the interpolated frame $I_1$ in areas of disocclusion, as well as other distortions where the linearity assumption does not hold. While the holes and distortions can potentially be rectified with optical flow during a refinement stage, it is proposed herein to supplement the flow with a pseudo-reverse motion vector $\hat{M}_{0\to2}$.

An example algorithm for generating $\hat{M}_{0\to2}$ is as follows. First, a perspective correct flow is generated from $0 \to 2$ for camera motion. The world-to-view space and view-to-projection space camera matrices, $\{C_0^{w\to v}, C_0^{v\to p}, \ C_2^{w\to v}, C_2^{v\to p}\}$, may be used, as well as depth map $D_0$, in order to perform a perspective projection of grid coordinates centered on 0 into 2. Given the resulting flow field $\hat{M}_{0\to2}^{\mathrm{cam}}$ for camera motion, overwriting of vectors in the field at positions corresponding to object motion is performed. To this end, the ground-truth motion vector $M_{0\to-1}$ that points to $I_{-2}$ is utilized, as well as the camera matrices $\{C_0^{w\to v}, C_0^{v\to p}, C_{-2}^{w\to v}, C_{-2}^{v\to p}\}$ and $D_0$. A perspective projection of grid coordinates to -2 is performed using the camera matrices, and the resulting positions in screen space $P_{-2}^{\mathrm{cam}}$ are compared with the positions $P_{-2}^{\mathrm{mv}}$ (translated from $0 \to -2$ by $M_{0\to-2}$). The process computes element-wise differences between $P_{-2}^{\mathrm{mv}}$ and $P_{-2}^{\mathrm{cam}}$ and then corrects the motion vectors $\hat{M}_{0\to2}^{\mathrm{mv}}$ based on these differences.

The resulting motion vector field $\hat{M}_{0\to2}$ captures displacement from $0 \to 2$ of both static objects, which are subject to camera motion only (via $\hat{M}_{0\to2}^{\mathrm{cam}}$) and displacement of moving objects (via $\hat{M}_{0\to2}^{\mathrm{mv}}$). For multi-frame interpolation, the linearity assumption from Equation 2 can be used in order to efficiently generate multiple motion vector candidates for each of the $K$ generated frames in $\mathcal{I}_{\mathrm{gen}}$. In other words, for the example of of $t = O = N = 1$ and 4x interpolation (i.e. $K = 3$), the set of bidirectional motion vector fields can be denoted as $\mathcal{M}_{\mathrm{gen}} = \{(0.25\hat{M}_{0\to4}, 0.75\hat{M}_{4\to0}),\dots, (0.75\hat{M}_{0\to4}, 0.25\hat{M}_{4\to0})\}$. Similarly to the optical flow estimation method, this can be splatted and reversed in order to generate t-centered flow for backward warping.

For extrapolation, it can be assumed that the game engine provides the unidirectional ground-truth motion vectors directly. For an example of $O = 1$, this equates to having $\mathcal{M}_{\mathrm{gen}} = \{M_{t\to0},\dots, M_{(t+K-1)\to0}\}$ directly from the game engine between each generated frame and $I_0$. The motion vector estimation process described above may be used to approximate the bidirectional vector field $\hat{M}_{0\to t}$.

Given the set of optical flows $\mathcal{F}_{\mathrm{gen}}$ and set of motion vector fields $\mathcal{M}_{\mathrm{gen}}$, the objective is to create an optimal blending between the optical flow and motion vector representations, in order to accurately generate the interpolated or extrapolated set of frames $\mathcal{I}_{\mathrm{gen}}$. An example of such a process will now be described.

An initial representation of flow warped and motion vector warped images may first be created. For extrapolation, it can be assumed that unidirectional motion vectors, already t-centered and taken directly from the game engine for each generated frame, can be used to efficiently backward warp the color. For interpolation, the bidirectional motion vectors are not t-centered and therefore may be splatted and reversed for backward warping.

Disocclusion masks for motion vectors can also be generated implicitly by adding a small scalar value $\alpha$ to the depth prior to motion vector splatting. Assuming the depth values range between 0 and 1, the scalar offset would push the range between $\alpha$ and $1 + \alpha$. In the splatted depth, any zero values would thus represent holes and areas of disocclusion.

For multi-frame interpolation and bidirectional flow + motion vectors, and using the sample instantiation $t = O = N = 1$, a tuple of warped representations per intermediate frame may be obtained. Over all generated (intermediate) frames $\mathcal{I}_{\mathrm{gen}}$, $\hat{\mathcal{I}}_{\mathrm{gen}} = \{(I_1^{\mathrm{MV},0}, I_1^{\mathrm{MV},K+1}, I_1^{\mathrm{Flow},0}, I_1^{\mathrm{Flow},K+1}),\dots, (I_K^{\mathrm{MV},0}, I_K^{\mathrm{MV},K+1}, I_K^{\mathrm{Flow},0}, I_K^{\mathrm{Flow},K+1})\}$. The subscript represents the frame index that is being warped into, and the superscript represents the vector field used for warping and the frame index from which the warp originates. For multi-frame extrapolation and the same sample instantiation, there is no contribution from the $K$+1th frame, so $\hat{\mathcal{I}}_{\mathrm{gen}} = \{(I_1^{\mathrm{MV},0}, I_1^{\mathrm{Flow},0}),\dots, (I_K^{\mathrm{MV},0}, I_K^{\mathrm{Flow},0})\}$.

Given the motion vector and flow fields, $\mathcal{M}_{\mathrm{gen}}$ and $\mathcal{F}_{\mathrm{gen}}$ respectively, and the warped frames $\hat{\mathcal{I}}_{\mathrm{gen}}$, refinement and blending steps may be performed. The refinement step is optional and involves updating the flow and motion vectors by adding a learned residual and rewarping (prior to the final summation). The blending step may involve mask generation. Mask generation involves using a neural network to learn how to weight optical flow and motion vector representations when performing the final summation. In the multi-frame setting, the set of generated masks can be denoted as $\mathcal{G}_{\mathrm{gen}} = \{G_t, C_{t+1},\dots, G_{t+K-1}\}$. Each mask in the set is C-dimensional (where C is the number of warped representations per generated frame). The neural network may have the design of a CNN block of the type of Figure 2, or a UNet architecture or otherwise, and the refinement can be performed jointly with the mask generation.

An example CNN block architecture is shown in Figure 2. Such an architecture may be used for the neural network for performing mask generation (i.e. the determination of weights for combining warped representations). Such an architecture may additionally or alternatively be used for flow estimation, as described above. The neural network may have other architectures in other embodiments, e.g. different numbers and/or types of layers and/or parameters. In embodiments, the neural network comprises any combination of weights connected in a network and having a non-linear function (e.g. an activation function). Example instantiations comprise multiple layers of weights and activation functions. Such layers of interconnected weights form an artificial neural network. Such embodiments may be trained with back-propagation of errors computed at the output layer, using gradient descent methods, for example.

Mask generation from scratch can be difficult under low model complexity. However, heuristics may be used to compute the accuracy of flow and motion vectors in the colorspace. Such heuristics may be calculated and/or used by a CNN, for example. For motion vectors ranging between $\mathcal{I}_0$ and $\mathcal{I}_1$, one can directly warp color between sets and compute an absolute error map per frame pairing. This can be aggregated and warped to a target timestep (e.g. $t$ to $t + K$) in $\mathcal{I}_{\mathrm{gen}}$.

For training the mask generation and refinement process, losses such as VGG losses and L1 loss can be used. Additionally, regularization losses can be used to bias towards certain representations.

In order to improve model generalization to unseen content, training may be performed with a variety of random data augmentations, including randomly augmenting the brightness, contrast, hue and saturation of the input and ground-truth images. Additionally, random crops, horizontal/vertical flips and rotations of the images and input flow vectors may be performed. The model may be trained with a batch size of 3 and large crop size of $1600 \times 1600$, in order to encompass the large motions that are inherent in 4k game captures.

Beyond these data augmentations, the static user interface (UI) that may be overlaid on game captures can be accounted for. To this end, figures and text may be randomly overlaid on the input and ground-truth images during training.

In embodiments, at least some of the methods described herein may be implemented by a system comprising a server and a user device (also referred to as a 'client device' or 'display device'). The server and the user device are operable to communicate with one another via one or more communications networks, e.g. a wireless local area network (WLAN), and one or more other networks, such as the Internet. The presently-disclosed methods may be performed using the server and/or the user device. For example, the user device may be configured to generate frames (i.e. intermediate frames) of video using the methods described herein, and then output the generated frames for display. Alternatively, the user device may receive the generated frames from the server. In some cases, some parts of the presently-disclosed methods may be performed using the server, and other parts of the presently-disclosed methods may be performed using the user device. For example, the server may encode video data and transmit the encoded video data as a bitstream via the communications network to the user device. The user device may then decode the encoded video data and optionally post-process the decoded video data (e.g. by generating intermediate frames) for display.

The embodiments described herein are applicable to batch processing, i.e. processing a group of images or video frames together without delay constraints (e.g. an entire video sequence), as well as to stream processing, i.e. processing only a limited subset of a stream of images or video frames, e.g. due to delay or buffering constraints.

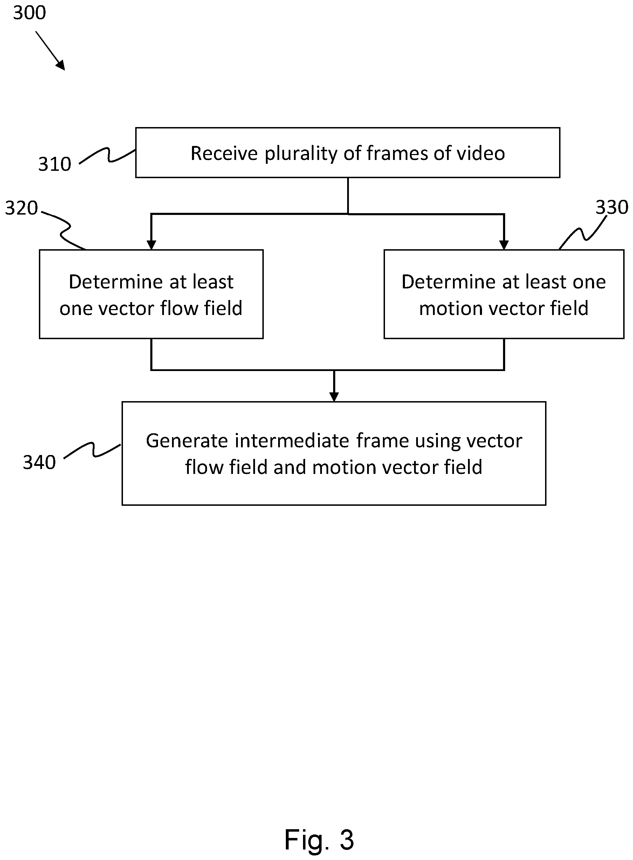

Figure 3 shows a method 300 of generating an intermediate frame of video, according to embodiments. The method 300 may be performed at least in part by hardware and/or software. For example, the method 300 may be performed at least in part by a user device and/or by a server. Although the steps of the method 300 are shown (and described) in a particular order, it will be understood that at least some of the steps may be performed in a different order than that shown. Additionally or alternatively, at least some of the steps may be performed concurrently.

At step 310, a plurality of frames of video are received. The frames in the received plurality of frames are temporally consecutive.

At step 320, at least one vector flow field is determined from the received plurality of frames. The at least one vector flow field represents a required pixel displacement between a received frame and the intermediate frame.

At step 330, at least one motion vector field is determined. The at least one motion vector field represents the motion of an object shown in the received frames. The at least one motion vector field may be determined from the received plurality of frames. Additionally or alternatively, the at least one motion vector field may be determined from one or more received motion vectors.

At step 340, the intermediate frame is generated from the received plurality of frames using the determined vector flow field and the determined motion vector field.

In embodiments, the received plurality of frames comprises frames temporally after the intermediate frame.

In embodiments, the method 300 further comprises generating a plurality of intermediate frames, including the intermediate frame, from the received plurality of frames.

In embodiments, the method 300 further comprises a step (not shown) of determining, for each intermediate frame of the plurality of intermediate frames, from the received plurality of frames, a corresponding vector flow field. In embodiments, each intermediate frame is generated using its corresponding determined vector flow field.

In embodiments, the method 300 further comprises a step (not shown) of generating, for each intermediate frame of the plurality of intermediate frames, from the determined one vector flow field, a corresponding intermediate vector flow field. In embodiments, each intermediate frame is generated using its corresponding intermediate vector flow field. In embodiments, each intermediate vector flow field is generated from the determined vector flow field using a linear function.

In embodiments, the method 300 further comprises a step (not shown) of receiving object motion information from a game engine for an object shown in the received frames. In such embodiments, the at least one motion vector field is determined using the received object motion information.

In embodiments, the at least one motion vector field comprises a first motion vector field indicative of camera movement, and a second motion vector field indicative of movement of an object shown in the received frames.

In embodiments, the method 300 comprises a step (not shown) of determining positions, in the received frames, that correspond to movement of an object. The method 300 may also comprise, for the determined positions, overwriting vectors in the first motion vector field with vectors in the second motion vector field. In embodiments, the determining the positions that correspond to movement of an object is based on a perspective projection of grid coordinates using world-to-view space and view-to-projection space camera matrices, and one or more ground-truth motion vectors.

In embodiments, the method 300 comprises a step (not shown) of generating, for each intermediate frame of the plurality of intermediate frames, from the determined one motion vector field, a corresponding intermediate motion vector field. In such embodiments, each intermediate frame is generated using its corresponding intermediate vector flow field.

In embodiments, generating the intermediate frame at item 340 comprises performing a first warping operation on at least one of the received frames using the determined at least one vector flow field to generate a first representation of the intermediate frame. Generating the intermediate frame at item 340 may further comprise performing a second warping operation on at least one of the received frames using the determined at least one motion vector field to generate a second representation of the intermediate frame. In embodiments, generating the intermediate frame at item 840 comprises determining a set of weights for combining the first representation and the second representation. In embodiments, generating the intermediate frame at item 840 comprises combining the first representation and the second representation in accordance with the determined set of weights. In embodiments, the set of weights is determined using an artificial neural network.

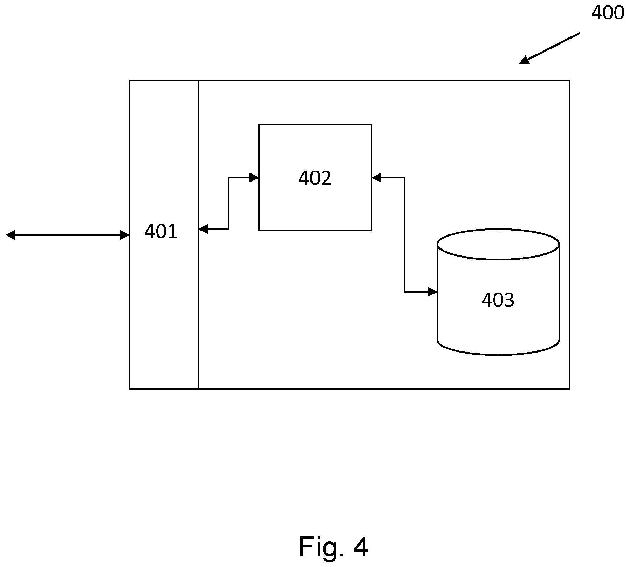

Embodiments of the disclosure include at least some of the methods described above performed on a computing device, such as the computing device 400 shown in Figure 4. The computing device 400 comprises a data interface 401, through which data can be sent or received, for example over a network. The computing device 400 further comprises a processor 402 in communication with the data interface 401, and memory 403 in communication with the processor 402. In this way, the computing device 400 can receive data, such as image data, video data or various data structures, via the data interface 401, and the processor 402 can store the received data in the memory 403, and process it so as to perform the methods described herein, including processing video data and/or generating frames of video.

Each device, module, component, machine or function as described in relation to any of the examples described herein may comprise a processor and/or processing system or may be comprised in apparatus comprising a processor and/or processing system. One or more aspects of the embodiments described herein comprise processes performed by apparatus. In some examples, the apparatus comprises one or more processing systems or processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device, etc.

While the present disclosure has been described and illustrated with reference to particular embodiments, it will be appreciated by those of ordinary skill in the art that the disclosure lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the disclosure that are described as preferable, advantageous, convenient or the like are optional and do not limit the scope of the independent claims. Moreover, it is to be understood that such optional integers or features, whilst of possible benefit in some embodiments of the disclosure, may not be desirable, and may therefore be absent, in other embodiments.

**Claims**

1. A computer-implemented method of generating an intermediate frame of video, comprising the steps of:

receiving a plurality of frames of video, wherein the frames are temporally consecutive;
determining, from the received plurality of frames, at least one vector flow field representing a required pixel displacement between a received frame and the intermediate frame;
determining at least one motion vector field representing the motion of an object shown in the received frames; and
generating the intermediate frame from the received plurality of frames using the determined vector flow field and the determined motion vector field.

2. A computer-implemented method according to claim 1, wherein the received plurality of frames comprises frames temporally after the intermediate frame.

3. A computer-implemented method according to claim 1 or claim 2, further comprising generating a plurality of intermediate frames, including the intermediate frame, from the received plurality of frames.

4. A computer-implemented method according to claim 3, further comprising a step of determining, for each intermediate frame of the plurality of intermediate frames, from the received plurality of frames, a corresponding vector flow field, wherein each intermediate frame is generated using its corresponding determined vector flow field.

5. A computer-implemented method according to claim 3, comprising a step of generating, for each intermediate frame of the plurality of intermediate frames, from the determined one vector flow field, a corresponding intermediate vector flow field,
wherein each intermediate frame is generated using its corresponding intermediate vector flow field.

6. A computer-implemented method according to claim 5, wherein each intermediate vector flow field is generated from the determined vector flow field using a linear function.

7. A computer-implemented method according to any of claims 3 to 6, comprising a step of generating, for each intermediate frame of the plurality of intermediate frames, from the determined one motion vector field, a corresponding intermediate motion vector field,

wherein each intermediate frame is generated using its corresponding intermediate vector flow field, and
wherein each intermediate motion vector field is generated from the determined one motion vector field using a linear function.

8. A computer-implemented method according to any preceding claim, further comprising a step of receiving object motion information from a game engine for an object shown in the received frames, wherein the at least one motion vector field is determined using the received object motion information.

9. A computer-implemented method according to any preceding claim, wherein the at least one motion vector field comprises a first motion vector field indicative of camera movement, and a second motion vector field indicative of movement of an object shown in the received frames.

10. A computer-implemented method according to claim 9, the method comprising:

determining positions, in the received frames, that correspond to the movement of the object, and
for the determined positions, overwriting vectors in the first motion vector field with vectors in the second motion vector field.

11. A computer-implemented method according to claim 10, wherein the determining the positions is based on a perspective projection of grid coordinates using world-to-view space and view-to-projection space camera matrices, and one or more ground-truth motion vectors.

12. A computer-implemented method according to any preceding claim, wherein generating the intermediate frame comprises:

performing a first warping operation on at least one of the received frames using the determined at least one vector flow field to generate a first representation of the intermediate frame;
performing a second warping operation on at least one of the received frames using the determined at least one motion vector field to generate a second representation of the intermediate frame;

determining a set of weights for combining the first representation and the second representation; and

combining the first representation and the second representation in accordance with the determined set of weights.

13. A computer-implemented method according to claim 12, wherein the set of weights is determined using an artificial neural network.

14. A computing device comprising:

   one or more processors; and
   memory,
   wherein the computing device is arranged to perform, using the one or more processors, a method according to any preceding claim.

15. A computer program product arranged, when executed on a computing device comprising one or more processors and memory, to cause the computing device to perform, using the one or more processors, a method according to any of claims 1 to 13.

Fig. 1

Fig. 2

300

310 — Receive plurality of frames of video

320 — Determine at least one vector flow field

330 — Determine at least one motion vector field

340 — Generate intermediate frame using vector flow field and motion vector field

Fig. 3

Fig. 4

Europäisches
Patentamt
European
Patent Office
Office européen
des brevets

# EUROPEAN SEARCH REPORT

**Application Number**

EP 25 15 1688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/095881 A1 (POTTORFF ROBERT THOMAS [US] ET AL) 21 March 2024 (2024-03-21) * paragraphs [0088] - [0192]; figures 1-10 * ----- | 1-15 | INV. H04N19/587 H04N7/01 G06T7/20 |
| X | US 2024/311959 A1 (HUANG TSUNG-SHIAN [TW] ET AL) 19 September 2024 (2024-09-19) * the whole document * ----- | 1,2, 8-12,14, 15 | |

| TECHNICAL FIELDS SEARCHED (IPC) |
|---|
| H04N G06T |

The present search report has been drawn up for all claims

| Place of search | Date of completion of the search | Examiner |
|---|---|---|
| Munich | 4 June 2025 | Rolet, Etienne |

EPO FORM 1503 03.82 (P04C01)

## ANNEX TO THE EUROPEAN SEARCH REPORT
## ON EUROPEAN PATENT APPLICATION NO.

EP 25 15 1688

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2025

| Patent document cited in search report | Publication date | Patent family member(s) | Publication date |
|---|---|---|---|
| US 2024095881 A1 | 21-03-2024 | DE 102023124922 A1<br>US 2024095881 A1 | 21-03-2024<br>21-03-2024 |
| US 2024311959 A1 | 19-09-2024 | EP 4432225 A1<br>TW 202439822 A<br>US 2024311959 A1 | 18-09-2024<br>01-10-2024<br>19-09-2024 |

EPO FORM P0459

For more details about this annex : see Official Journal of the European Patent Office, No. 12/82